# EUROPÄISCHE PATENTANMELDUNG

(11) **EP 3 141 734 A1**
(43) Veröffentlichungstag der Anmeldung: **15.03.2017**
(21) Anmeldenummer: 15184272.1
(22) Anmeldetag: 08.09.2015
(51) Int. Cl.: F02M 26/49, F02M 26/46, F02M 26/35, F02D 21/08, F02D 41/00, F01N 3/04, F02M 26/05, F02M 26/16, F02M 26/34

(54) **ABGASREZIRKULIERUNGSSYSTEM FÜR EINE VERBRENNUNGSMASCHINE, VERBRENNUNGSMASCHINE, VERFAHREN ZUM ÜBERWACHEN DES ABGASREZIRKULIERUNGSPROZESSES EINER VERBRENNUNGSMASCHINE, VERFAHREN ZUM NACHRÜSTEN EINES ABGASREZIRKULIERUNGSSYSTEMS SOWIE KIT ZUM NACHRÜSTEN EINES VERBRENNUNGSMOTORS**

(71) Anmelder: Winterthur Gas & Diesel Ltd., 8401 Winterthur (CH)
(72) Erfinder: Brutsche, Martin, 8400 Winterthur (CH)
(74) Vertreter: Hepp Wenger Ryffel AG

(57) **Zusammenfassung**

Ein Abgasrezirkulierungssystem (1) für eine Verbrennungsmaschine (2), insbesondere eine Zwei-Takt-Verbrennungsmaschine, weist einen Abgasauslass (3) und einen Lufteinlass (4) auf. Es handelt sich bei der Verbrennungsmaschine (2) bevorzugt um einen Schiffsmotor. Das Abgasrezirkulierungssystem (1) umfasst Mittel zum Verbinden des Abgasrezirkulierungssystems (1) mit dem Abgasauslass (3) sowie Mittel zum Verbinden des Abgasrezirkulierungssystem (1) mit dem Lufteinlass (4), wobei Abgas in Abgasflussrichtung vom Mittel zum Verbinden des Abgasrezirkulierungssystems mit dem Abgasauslass (3) zu dem Mittel zum Verbinden des Abgasrezirkulierungssystems mit dem Lufteinlass (4) leitbar ist. Das Abgasrezirkulierungssystem (1) umfasst ein Abgaseinlassventil (5) zum kontrollieren des Einlasses von Abgas in das Abgasrezirkulierungssystem (1), einen Abgasreiniger (6) und eine Steuerungseinheit (7) zum Steuern des Abgasflusses durch das Abgasrezirkulierungssystem (1). Mittel zum Feststellen eines Ausscheidkriteriums sind vorhanden, durch die ein Steuersignal an die Steuerungseinheit (7) schickbar ist.

## Beschreibung

Die Erfindung betrifft ein Abgasrezirkulierungssystem für eine Verbrennungsmaschine, eine Verbrennungsmaschine, ein Verfahren zum Überwachen des Abgasrezirkulierungsprozesses einer Verbrennungsmaschine, ein Verfahren zum Nachrüsten eines Abgasrezirkulierungssystems sowie ein Kit zum Nachrüsten eines Verbrennungsmotors gemäss dem Oberbegriff der unabhängigen Ansprüche.

Aufgrund der strenger werdenden Vorschriften für Grenzwerte von beispielsweise NO_{X} finden insbesondere im Bereich der Grossmotoren im Schiffsbau Abgasrezirkulierungssysteme immer mehr Verbreitung. Das Abgasrezirkulierungssystem rezirkuliert einen Teil des Abgases zurück zum Lufteinlass des Motors, wobei aufgrund der Zusammensetzung des verwendeten Kraftstoffs und der bei der Verbrennung entstehenden Partikel das Abgas im Abgasrezirkulierungssystem üblicherweise gereinigt wird. Die Reinigung wird durch einen Abgasreiniger durchgeführt.

Bei den bisherigen Systemen ist es nachteilig, dass Situationen auftreten können, in denen ungereinigtes Abgas zurück in die Verbrennungsmaschine geleitet wird. Dies kann zu nachhaltiger Schädigung des Verbrennungsmotors führen.

Es ist daher die Aufgabe der vorliegenden Erfindung, die Nachteile des Standes der Technik zu vermeiden und ein Abgasrezirkulierungssystem für eine Verbrennungsmaschine, ein Verfahren zum Überwachen des Abgasrezirkulierunsprozesses einer Verbrennungsmaschine, ein Verfahren zum Nachrüsten eines Abgasrezirkulierungssystems sowie ein Kit zum Nachrüsten eines Verbrennungsmotors zu schaffen, welche ein unkontrolliertes Einführen von Abgas in den Lufteinlass eines Verbrennungsmotors verhindern.

Die Aufgabe wird durch ein Abgasrezirkulierungssystem für eine Verbrennungsmaschine, eine Verbrennungsmaschine, ein Verfahren zur Überwachung des Abgasrezirkulierungssprozesses, ein Verfahren zum Nachrüsten eines Abgasrezirkulierungssystems sowie ein Kit zum Nachrüsten eines Verbrennungsmotors gemäss dem Kennzeichen in dem Teil der unabhängigen Ansprüche gelöst.

Die Aufgabe wird insbesondere durch ein Abgasrezirkulierungssystem für eine Verbrennungsmaschine, insbesondere einer Zwei-Takt Verbrennungsmaschine, bevorzugt ein Schiffsmotor gelöst, wobei die Verbrennungsmaschine ein Abgasauslass und einen Lufteinlass aufweist. Das Abgasrezirkulierungssystem umfasst Mittel zum Verbinden des Abgasrezirkulierungssystems mit dem Abgasauslass sowie Mittel zum Verbinden des Abgasrezirkulierungssystems mit dem Lufteinlass. Abgas ist in Abgasflussrichtung vom Mittel zum Verbinden des Abgasrezirkulierungssystems mit dem Abgasauslass zu dem Mittel zum Verbinden des Abgasrezirkulierungssystemes mit dem Lufteinlass leitbar. Das Abgasrezirkulierungssystem umfasst weiterhin ein Abgaseinlassventil zum Kontrollieren des Einlasses von Abgas in das Abgasrezirkulierungssystem, einen Abgasreiniger und eine Steuerungseinheit zum Steuern des Abgasflusses durch das Abgasrezirkulierungssystem. Weiterhin sind Mittel zum Feststellen eines Ausschaltkriteriums vorhanden, durch die ein Steuerungssignal an die Steuerungseinheit schickbar ist.

Die Steuerungseinheit steuert das Abgaseinlassventil.

Bei den Mitteln zum Verbinden des Abgasrezirkulierungssystems mit dem Abgasauslass sowie Mitteln zum Verbinden des Abgasrezirkulierungssystems mit dem Lufteinlass handelt es sich beispielsweise um eine anschweissbare oder anflanschbare Rohrleitung.

Ein Abgasreininger kann ein Trockenreiniger (Dry Scrubber) oder ein Nassreiniger (Wet Scrubber) sein.

Ein derartiges Abgasrezirkulierungssystem kann ausgeschaltet werden, sobald ein vordefiniertes Ausschaltkriterium vorliegt. Somit kann der Motor vor schädlichen Einflüssen geschützt werden.

Das Mittel zum Feststellen eines Ausschaltkriteriums ist durch einen Gassensor gebildet, der in Abgasflussrichtung nach dem Abgasreiniger angeordnet ist, insbesondere einen Gassensor, der mit der Steuerungseinheit verbunden ist.

Durch einen Gassensor kann das Gas nach dem Abgasreiniger auf bestimmte Inhaltsstoffe überprüft werden und somit die korrekte Funktion des Abgasreinigers überprüft werden.

Das Abgasrezirkulierungssystem umfasst einen Kühler in Abgasflussrichtung nach dem Abgasreiniger, bevorzugt in Abgasflussrichtung nach dem Gassensor.

Somit kann das gewaschene Abgas gekühlt werden und führt zu einem besseren Wirkungsgrad der Verbrennung.

Bevorzugt wird der Gassensor zwischen Abgasreiniger und Abgaskühler angeordnet, um eine Verfälschung der Messwerte des Gassensors durch Auskondensieren der Schwefelsäure zu verhindern. Falls ein System einen Abgasreiniger und einen Abgas-Vorwäscher aufweist, sind daher bevorzugt entweder nur direkt in Abgasflussrichtung nach dem Vorwäscher ein Gassensor oder direkt in Abgasflussrichtung nach dem Abgasreiniger ein Gassensor ausgebildet. Alternativ können auch zwei Gassensoren, je einer direkt in Abgasflussrichtung nach dem Vorwäscher und in Abgasflussrichtung nach dem Abgasreiniger ausgebildet sein. Für ein System mit nur einem Abgasreiniger ist der Gassensor bevorzugt zwischen Abgasreiniger und Kühler angeordnet.

Das Abgasrezirkulierungssystem kann einen Wasserabscheider in Abgasflussrichtung nach dem Kühler umfassen.

Durch den Wasserabscheider wird das gereinigte und bevorzugt gekühlte Abgas getrocknet, sodass weniger Wasser in den Verbrennungsraum hereingeleitet wird und somit weniger Korrosion entsteht, die Verbrennung optimal ablaufen kann sowie der Schmierölfilm an der Zylinderwand nicht zerstört wird.

Das Abgasrezirkulierungssystem kann eine Druckerhöhungsvorrichtung, insbesondere einen Turbolader oder ein Gebläse umfassen, sodass der Druck des gereinigten Abgases auf oder über das Ladedruckniveau erhöhbar ist. Somit werden Druckverluste kompensiert und das Abgas kann in den Lufteinlass einströmen. Das Abgasrezirkulierungssystem umfasst ein Abgasrückführungsventil, welches in Abgasflussrichtung vor dem Mittel zum Verbinden des Abgasrezirkulierungssystems mit dem Lufteinlass angeordnet ist. Somit kann das Abgasrezirkulierungssystem auch direkt vor dem Lufteinlass abgeriegelt werden. Es ist daher ein schnelleres Ausschalten des Abgasrezirkulierungssystems möglich.

Der Gassensor kann ein Schwefelsensor, insbesondere ein Schwefeloxidsensor, sein, sodass Schwefeloxid im Abgas messbar ist. Im Rahmen der Erfindung bedeutet Schwefeloxid entweder SO oder SO₂ oder SO₃ oder eine beliebige Kombination der genannten Schwefeloxide. Bevorzugt wird SO₂ gemessen. Insbesondere, handelt es sich um einen Schwefeldioxidsensor (SO₂-Sensor).

Schwefel führt zu schwerwiegender Korrosion, sodass das Vorhandensein von Schwefeloxid in dem rezirkulierten Abgas verhindert werden muss.

Der gemessene Schwefeldioxidgrenzwert, der zu einem Abschalten des Abgasrezirkulierungssystems führt liegt bevorzugt in einem Bereich von 3-100 ppm abhängig vom verwendeten Treibstoff und der Sensorempfindlichkeit.Für einen Treibstoff mit 0.1% Schwefelgehalt liegt der Schwefeldioxidgrenzwert bevorzugt bei 2-5 ppm, insbesondere bei 3 ppm. Für einen Treibstoff mit 0.5% Schwefelgehalt liegt der Schwefeldioxidgrenzwert bevorzugt bei 3-20 ppm, insbesondere bei 15 ppm. Für Treibstoffe mit höherem Schwefelgehalt ist die Bandbreite der Abschaltwerte grösser, da der Schwefelgehalt stark variieren kann. Der Schwefeldioxidgrenzwert kann daher bei bis zu 100 ppm liegen. Für einen hoch schwefelhaltigen Treibstoff mit beispielsweise 3.5% Schwefel liegt der Abschaltwert beispielsweise bei 20-100 ppm Schwefeldioxid.

Da ein Abgasreiniger nicht 100% des Schwefels oder der Schwefelverbindungen aus dem Abgas filtern kann, muss der Grenzwert abhängig von Schwefelgehalt des Treibstoffes und vom Wirkungsgrad des Abgasreinigers gewählt werden.

Im Allgemeinen hängt der Schwefeldioxidgrenzwert ebenfalls davon ab, welchen Effizienzwert der Abgasreiniger erreicht. Typischerweise liegt die Abgasreinigereffizienz in einem Bereich von 95%-99%, wobei 90% als niedrigstes Limit für einen Normalbetrieb betrachtet werden kann. Für Treibstoffe mit hohem Schwefelgehalt sollte 90% als niedrigster erlaubter Wert betrachtet werden. Bevorzugt ist auch bei Treibstoffen mit hohem Schwefelgehalt der Effizienzmindestwert bei 95%. Für Treibstoffe mit geringem Schwefelgehalt (insbesondere zwischen 0.1% und 0.5%) kann der niedrigste Effizienzwert auf 85% festgelegt werden, da derartig geringe Werte nicht leicht mit hoher Genauigkeit messbar sind. Des Weiteren ist der Schwefeldioxidgehalt im Abgas so gering, dass eine geringere Abgasreinigereffizienz für eine kurze Zeit akzeptabel sein kann. Bevorzugt sollte die Abgasreinigereffizienz jedoch bei Treibstoffen mit niedrigem Schwefelgehalt bei 90% liegen.

Durch die Steuerungseinheit kann das Abgaseinlassventil und bevorzugt auch das Abgasrückführungsventil steuerbar sein. Insbesondere kann das jeweilige Ventil durch ein Signal der Steuerungseinheit steuerbar sein, wobei das Signal durch einen Vergleich in der Steuerungseinheit eines gemessenen Wertes des Gassensors mit einem Grenzwert auslösbar ist. Die Steuerungseinheit kann hierbei separat oder als Teil des Gassensors ausgebildet sein.

Somit kann das Abgasrezirkulierungssystem bei Vorliegen eines Überschreitens des Grenzwertes ausgeschaltet werden und somit eine Beschädigung des Motors verhindert werden.

Das Abgasrezirkulierungssystem kann bei Annäherung eines Wertes an ein Ausschaltkriterium ein Warnsignal ausgeben. Das Warnsignal kann optisch oder akustisch ausgebbar sein. Insbesondere kann bei Messung eines Wertes ein Warnsignal ausgegeben werden, sobald sich dieser im Bereich von 80% bis 90%, bevorzugt 85%, eines vordefinierten Grenzwertes befindet.

Die Aufgabe wird weiterhin durch eine Verbrennungsmaschine, insbesondere Zwei-Takt Verbrennungsmaschine umfassend einen Abgasauslass und einen Lufteinlass, bevorzugt einen Spülluftreceiver und ein Abgasrezirkulierungssystem wie vorhergehend beschrieben gelöst. Die Mittel zum Verbinden des Abgasrezirkulierungssystems mit dem Lufteinlass sind direkt mit dem Lufteinlass oder über den Spülluftreceiver indirekt mit dem Lufteinlass verbunden und die Mittel zum Verbinden des Abgasrezirkulierungssystem mit dem Abgasauslass sind mit dem Abgasauslass verbunden.

Eine derartige Verbrennungsmaschine kann vor einer Fehlfunktion des Abgasrezirkulierungssystems geschützt werden.

Zur Lösung der Aufgabe führt weiterhin ein Verfahren zum Überwachen des Abgasrezirkulierungsprozesses einer Verbrennungsmaschine insbesondere mit einem Abgasrezirkulierungssystem wie vorhergehend beschrieben. Eine Steuerungseinheit schaltet das Abgasrezirkulierungssystem ab, sobald ein Ausschaltkriterium erfüllt ist, insbesondere sobald ein Gassensor das Überschreiten eines Grenzwertes anzeigt.

Mit einem derartigen Verfahren kann das Abgasrezirkulierungssystem rechtzeitig abgeschaltet werden und so eine Beschädigung der Verbrennungsmaschine verhindert werden.

Der Gassensor kann den Schwefelgehalt, insbesondere den Schwefeloxidgehalt, insbesondere SO und/oder SO₂ und/oder SO₃, des Abgases messen und bei Überschreiten eines Schwefeloxidgrenzwertes ein Signal an die Steuerungseinheit senden, die daraufhin das Abgasrezirkulierungssystem abschaltet. Das Abgasrezirkulierungssystem wird insbesondere durch Schliessen eines Abgaseinlassventils und bevorzugt durch zusätzliches Schliessen eines Abgasrückführungsventils abgeschaltet.

Somit kann die Verbrennungsmaschine vor Korrosion durch Schwefelverbindungen durch Rückführung schwefelhaltigen Abgases geschützt werden.

Im Rahmen der Erfindung bedeutet Schwefeloxid entweder SO oder SO₂ oder SO₃ oder eine beliebige Kombination der genannten Schwefeloxide. Bevorzugt wird SO₂ gemessen.

Der gemessene Schwefeldioxidgrenzwert (SO₂), der zu einem Abschalten des Abgasrezirkulierungssystems führt, liegt bevorzugt in einem Bereich von 3-100 ppm abhängig vom verwendeten Treibstoff und der Sensorempfindlichkeit. Für einen Treibstoff mit 0.1% Schwefelgehalt liegt der Schwefeldioxidgrenzwert bevorzugt bei 2-5 ppm, insbesondere bei 3 ppm. Für einen Treibstoff mit 0.5% Schwefelgehalt liegt der Schwefeldioxidgrenzwert bevorzugt bei 3-20 ppm, insbesondere bei 15 ppm. Für Treibstoffe mit höherem Schwefelgehalt ist die Bandbreite der Abschaltwerte grösser, da der Schwefelgehalt stark variieren kann. Der Schwefeldioxidgrenzwert kann daher bei bis zu 100 ppm liegen. Für einen hoch schwefelhaltigen Treibstoff mit beispielsweise 3.5% Schwefel liegt der Abschaltwert beispielsweise bei 20-100 ppm Schwefeldioxid.

Das Ausschaltkriterium kann eine zu hohe oder zu tiefe Temperatur sein.

Die gemessene Temperatur kann beispielsweise eine zu hohe Temperatur des Abgases nach dem Abgaskühler sein, oder eine zu hohe Temperatur des Kühlwassers für die Abgasrezirkulation oder die Temperatur in einem NaOH-Reservoir liegt unterhalb von 12°C.

Das NaOH-Reservoir beinhaltet Natronlauge (NaOH) zur Behandlung von Wasser, welche für den Abgasreiniger zur Verfügung gestellt wird. Das NaOH neutralisiert die im Wasser des Abgasreinigers entstandene Säure.

Eine zu hohe oder zu tiefe Temperatur kann das ordnungsgemässe Funktionieren des Abgasrezirkulierungssystems verhindern und somit ebenso zu Beschädigung der Verbrennungsmaschine führen.

Das Ausschaltkriterium kann das Versagen eines Versorgungssystems für den Abgasreiniger und/oder den Abgasvorwäscher sein.

Ein Versorgungssystem für den Abgasreiniger, insbesondere einen Nassreiniger, ist beispielsweise eine Wasserbehandlungseinheit, die die Wasserversorgung für den Abgasreiniger sicherstellt. Hierbei kann einerseits die Wasserversorgung zu dem Abgasreiniger an sich versagen, der Sammeltank für das verwendete Wasser aus dem Abgasreiniger kann voll sein, der Sammeltank kann sich ungewöhnlich schnell füllen, die Versorgung mit NaOH versagt oder ist zu gering, der NaOH-Tank ist leer oder unterhalb eines Minimalwertes, ein Puffertank nimmt mehr Flüssigkeit auf, als er abgibt, der Restwassertank ist voll, eine der Pumpen in der Wasserversorgungseinheit ist fehlerhaft, einer der Tanks hat ein Leck, der Abgasreiniger kann nicht entwässert werden, die Qualität des Reinigungswassers ist nicht ausreichend oder der Separator zur Trennung von sauberem Wasser und Abwasser funktioniert nicht.

Somit kann auch das Abgasrezirkulierungssystem selber geschützt werden, falls seine Versorgungsvorrichtungen nicht korrekt funktionieren.

Das Ausschaltkriterium kann das Versagen einer Vorrichtung des Abgasrezirkulierungssystems wie vorhergehend beschrieben sein.

Es kann somit das Versagen des Abgasreinigers, des Kühlers, des Wasserseparators eines eventuell vorhandenen Vorwäschers oder des Gassensors an sich sein.

Somit wird das Abgasrezirkulierungssystem auch ausgeschaltet wenn Teile des Abgasrezirkulierungssystems nicht funktionieren.

Zur Lösung der Aufgabe führt weiterhin ein Verfahren zum Nachrüsten eines Abgasrezirkulierungssystems wie vorhergehend beschrieben in einen Verbrennungsmotor, insbesondere einen Zwei-Takt-Schiffsmotor.

Ein derartiges Verfahren ermöglicht das einfache Nachrüsten eines Abgasrezirkulierungssystems auf einen bestehenden Verbrennungsmotor.

Zur Lösung der Aufgabe führt weiterhin ein Kit zum Nachrüsten eines Abgasrezirkulierungssystems auf einen Verbrennungsmotor, insbesondere eines Zwei-Takt-Schiffsmotors, mit einem Abgasrezirkulierungssystem wie vorhergehend beschrieben oder bei vorhandenem Abgasrezirkulierungssystem mit einem Gassensor und/oder einer Steuerungseinheit, durch die ein Verfahren gemäss wie vorhergehend beschrieben ausführbar ist, zur Überwachung der Abgasrezirkulierung.

Somit können vorhandene Verbrennungsmotoren nachgerüstet werden und ebenfalls vor Beschädigungen geschützt werden.

Die Erfindung wird im Folgenden anhand von Ausführungsbeispielen näher erläutert. Hierbei zeigt:
- Figur 1:: Eine schematische Darstellung einer ersten Ausführungsform eines Verbrennungsmotors mit Abgasrezirkulierungssystem;
- Figur 2:: Eine schematische Darstellung einer zweiten Ausführungsform eines Verbrennungsmotors mit Abgasrezirkulierungssystem;
- Figur 3:: Eine schematische Darstellung einer dritten Ausführungsform eines Verbrennungsmotors mit Abgasrezirkulierungssystem
- Figur 4:: Eine schematische Darstellung eines Abgasrezirkulierungssystems mit Versorgungseinrichtungen;
- Figur 5:: Eine schematische Darstellung eines Abgasrezirkulierungssystems mit einem Trockenreiniger.

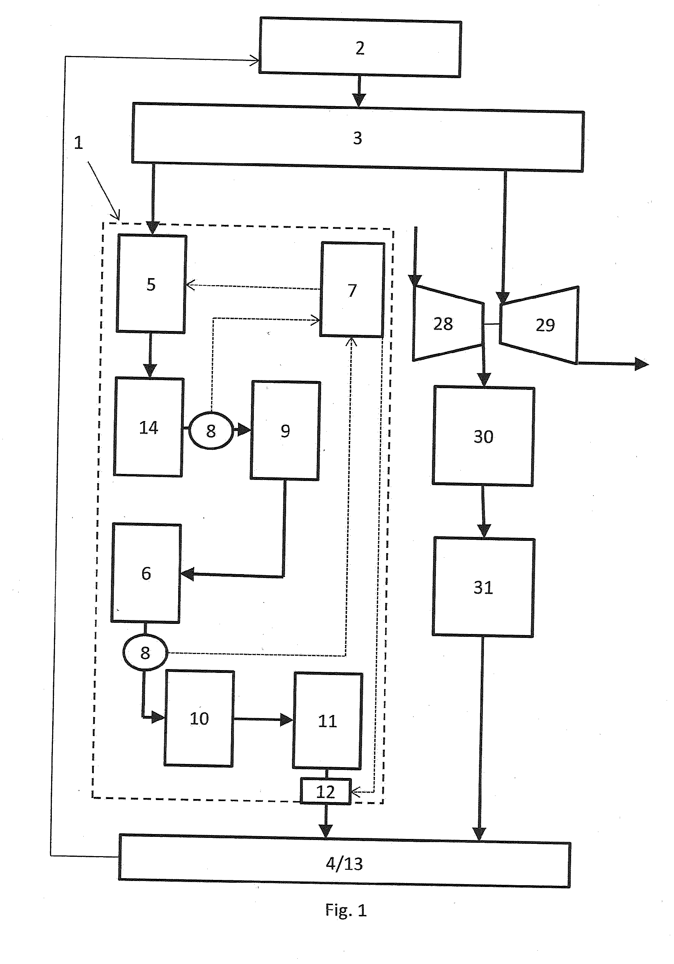

Figur 1 zeigt ein Abgasrezirkulierungssystem 1, welches zwischen Abgasauslass 3 und Lufteinlass 4 einer Verbrennungsmaschine 2 eines Schiffes eingebaut ist. Das Abgasrezirkulierungssystem 1 ist mit dem Abgasauslass 3 über Mittel zum Verbinden des Abgasrezirkulierungssystems 1 mit dem Abgasauslass 3 verbunden. Dies kann beispielsweise eine Rohrleitung sein, die angeschweisst oder angeflanscht ist. Mit dem Lufteinlass 4 ist das Abgasrezirkulierungssystem 1 über Mittel zum Verbinden des Abgasrezirkulierungssystems 1 mit dem Lufteinlass 4 verbunden. Auch hierbei kann es sich um eine angeschweisste oder angeflanschte Rohrleitung handeln. Das Abgasrezirkulierungssystem 1 umfasst ein Abgaseinlassventil 5, einen Abgasreiniger 6, eine Steuerungseinheit 7, einen Gassensor 8, einen Kühler 9, einen Wasserabscheider 10 und eine Druckerhöhungsvorrichtung 11. Optional ist ein Abgasvorwäscher 14 und ein Abgasrückführungsventil 12 vorgesehen. Das Abgas wird vom Abgasauslass 3 der Verbrennungsmaschine 2 in das Abgasrezirkulierungssystem 1 geleitet. Die Abgasflussrichtung ist daher vom Abgasauslass 3 zum Lufteinlass 4. Die Steuerungseinheit 7 empfängt vom Gassensor 8 die Information über einen gemessenen Gaswert wie beispielsweise den Schwefeloxidgehalt des Abgases nach dem Abgasreiniger 6. Falls dieser Wert einen vorbestimmten Grenzwert, beispielsweise für Kraftstoff mit 0.1% Schwefelgehalt einen Grenzwertbereich von 2 bis 5 ppm Schwefelanteil überschreitet, wird das Abgaseinlassventil 5 geschlossen, sodass kein Abgas mehr rezirkuliert wird. Zusätzlich wird auch das Abgasrückführungsventil 12 geschlossen. Somit wird sichergestellt, dass kein Abgas mit überhöhten Schwefelwerten in den Verbrennungsmotor zurückgeführt wird und somit übermässige schwefel-basierte Korrosion in der Verbrennungsmaschine 2 weitgehend verhindert wird.

Die Verbrennungsmaschine 2 weist weiterhin einen Hauptstrang zur Turboaufladung der Verbrennungsmaschine 2 zwischen Abgasauslass 3 und Lufteinlass 4 auf. Hierzu wird, wie bereits aus dem Stand der Technik bekannt, das Abgas aus Abgasauslass 3 auf eine Turbine 29 geleitet. Die Turbine 29 treibt einen Kompressor 28 an, der Frischluft, d.h. Umgebungsluft und eben kein Abgas, ansaugt und den Druck der eingesaugten Luft erhöht. Diese Luft wird dann über Frischluftkühler 30 und Frischluftwasserabscheider 31 geleitet und dann durch den Lufteinlass 4 in die Verbrennungsmaschine 2 eingeführt. Bei einem Grossmotor wie beispielsweise einem Schiffsmotor ist dem Lufteinlass 4 ein Spülluftreceiver 13 vorgelagert.

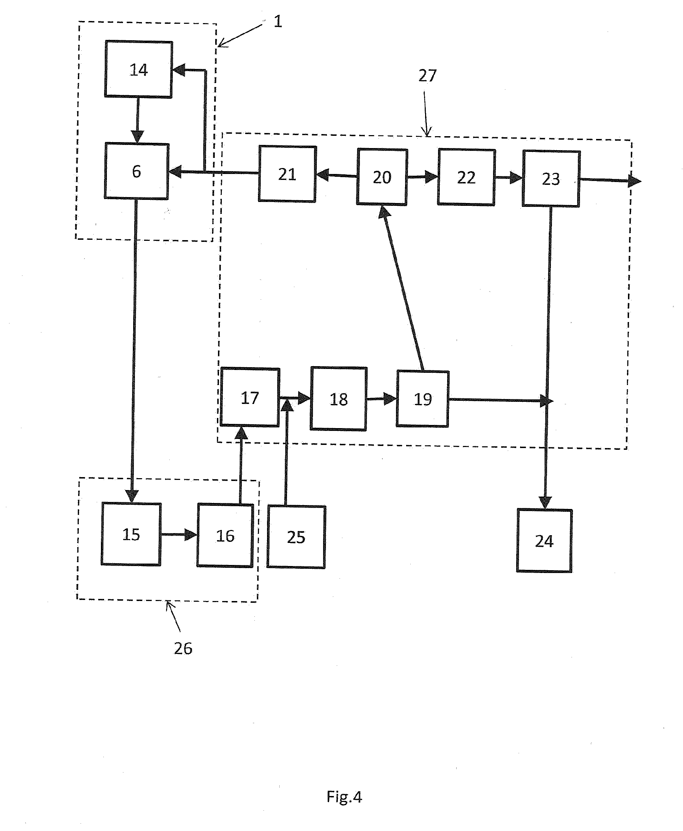

Im üblichen Abgasrezirkulierungsbetrieb wird ca. 30 bis 40% des Abgases rezirkuliert. Für den Fall eines Abschaltens des Abgasrezirkulierungssystems 1 wird das Abgas vollständig über Turbolader 29 geleitet. Das Versorgungssystem für das Abgasrezirkulierungssystem 1 ist in der folgenden Figur 4 dargestellt.

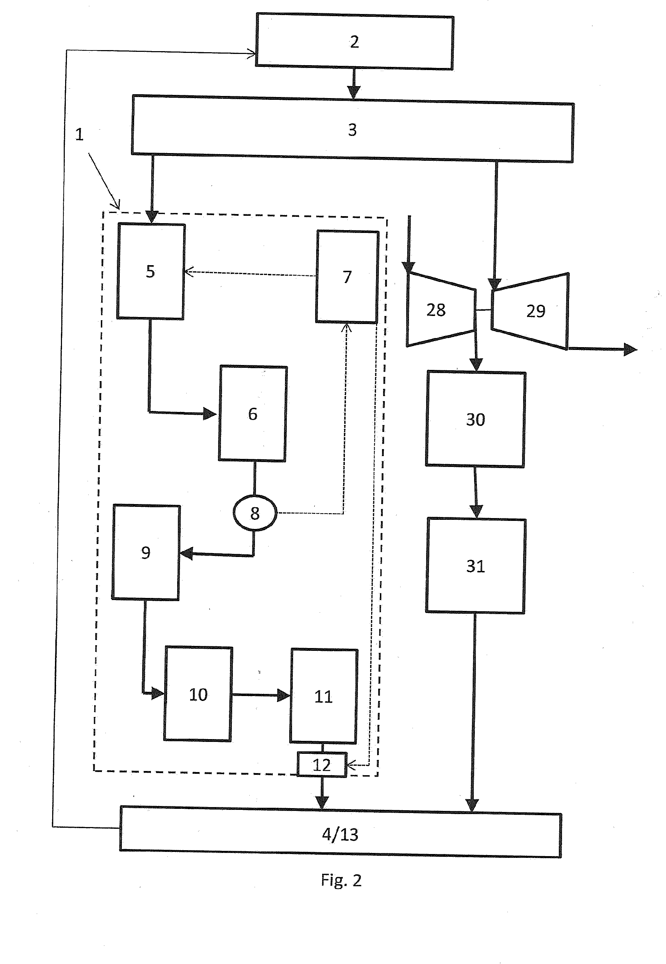

Figur 2 zeigt eine alternative Ausführungsform eines Abgasrezirkulierungssystems 1, welches zwischen Abgasauslass 3 und Lufteinlass 4 einer Verbrennungsmaschine 2 eines Schiffes eingebaut ist. Das Abgasrezirkulierungssystem 1 ist mit dem Abgasauslass 3 über Mittel zum Verbinden des Abgasrezirkulierungssystems 1 mit dem Abgasauslass 3 verbunden. Dies kann beispielsweise eine Rohrleitung sein, die angeschweisst oder angeflanscht ist. Mit dem Lufteinlass 4 ist das Abgasrezirkulierungssystem 1 über Mittel zum Verbinden des Abgasrezirkulierungssystems 1 mit dem Lufteinlass 4 verbunden. Auch hierbei kann es sich um eine angeschweisste oder angeflanschte Rohrleitung handeln. Das Abgasrezirkulierungssystem 1 umfasst ein Abgaseinlassventil 5, einen Abgasreiniger 6, eine Steuerungseinheit 7, einen Gassensor 8, einen Kühler 9, einen Wasserabscheider 10 und eine Druckerhöhungsvorrichtung 11. Optional ist ein Abgasrückführungsventil 12 vorgesehen. Der Gassensor 8 ist nach dem Abgasreiniger 6 und vor dem Kühler 9 angeordnet. Der Abgasreiniger 6 ist ein Nassreiniger. Das Abgas wird vom Abgasauslass 3 der Verbrennungsmaschine 2 in das Abgasrezirkulierungssystem 1 geleitet. Die Abgasflussrichtung ist daher vom Abgasauslass 3 zum Lufteinlass 4. Die Steuerungseinheit 7 empfängt vom Gassensor 8 die Information über einen gemessenen Gaswert wie beispielsweise den Schwefeloxidgehalt, insbesondere SO₂, des Abgases nach dem Abgasreiniger 6. Falls dieser Wert einen vorbestimmten Grenzwert, beispielsweise für Kraftstoff mit 0.1% Schwefelgehalt einen Grenzwertbereich von 2 bis 5 ppm Schwefelanteil überschreitet, wird das Abgaseinlassventil 5 geschlossen, sodass kein Abgas mehr rezirkuliert wird. Zusätzlich wird auch das Abgasrückführungsventil 12 geschlossen. Somit wird sichergestellt, dass kein Abgas mit überhöhten Schwefelwerten in den Verbrennungsmotor zurückgeführt wird und somit übermässige schwefel-basierte Korrosion in der Verbrennungsmaschine 2 weitgehend verhindert wird.

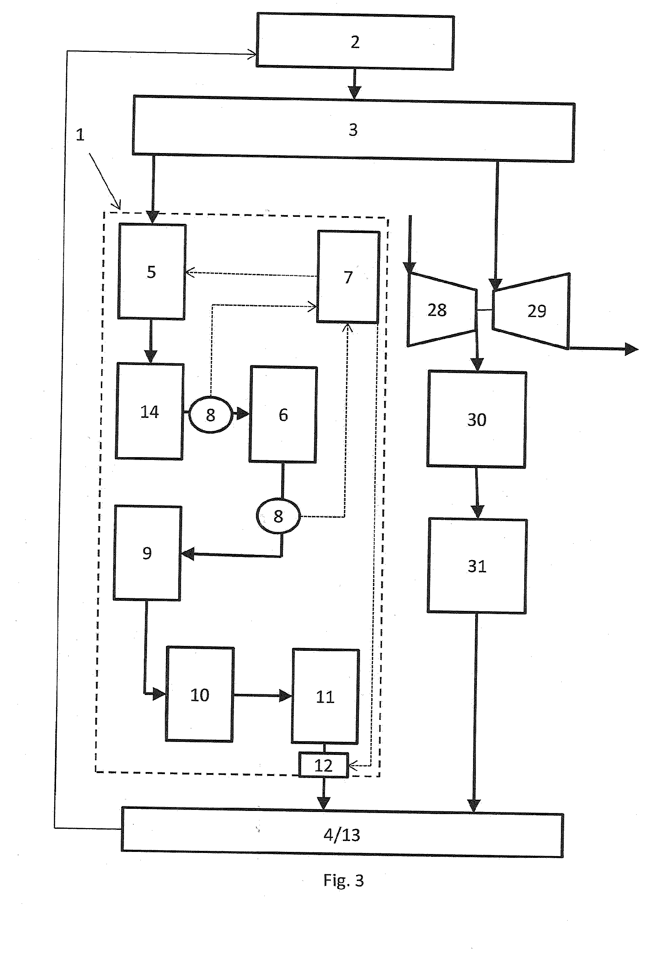

Figur 3 zeigt eine weitere alternative Ausführungsform eine Abgasrezirkulierungssystems 1, welches zwischen Abgasauslass 3 und Lufteinlass 4 einer Verbrennungsmaschine 2 eines Schiffes eingebaut ist. Das Abgasrezirkulierungssystem 1 ist mit dem Abgasauslass 3 über Mittel zum Verbinden des Abgasrezirkulierungssystems 1 mit dem Abgasauslass 3 verbunden. Dies kann beispielsweise eine Rohrleitung sein, die angeschweisst oder angeflanscht ist. Mit dem Lufteinlass 4 ist das Abgasrezirkulierungssystem 1 über Mittel zum Verbinden des Abgasrezirkulierungssystems 1 mit dem Lufteinlass 4 verbunden. Auch hierbei kann es sich um eine angeschweisste oder angeflanschte Rohrleitung handeln. Das Abgasrezirkulierungssystem 1 umfasst ein Abgaseinlassventil 5, einen Abgasreiniger 6, eine Steuerungseinheit 7, einen Gassensor 8, einen Kühler 9, einen Wasserabscheider 10 und eine Druckerhöhungsvorrichtung 11. Weiterhin ist ein Abgasvorwäscher 14 ausgebildet, der vor dem Abgasreiniger 6 angeordnet ist. Optional ist ein Abgasrückführungsventil 12 vorgesehen. Der Gassensor 8 ist nach dem Abgasreiniger 6 und vor dem Kühler 9 angeordnet. Ein weiter optionaler Gassensor 8 ist bereits nach dem Abgasvorwäscher 14 angeordnet, so dass auch die Funktion des Abgasvorwäschers bereits durch einen Gassensor 8 überwacht wird. Der Abgasreiniger 6 und der Abgasvorwäscher 14 sind Nassreiniger. Das Abgas wird vom Abgasauslass 3 der Verbrennungsmaschine 2 in das Abgasrezirkulierungssystem 1 geleitet. Die Abgasflussrichtung ist daher vom Abgasauslass 3 zum Lufteinlass 4. Die Steuerungseinheit 7 empfängt vom Gassensor 8 die Information über einen gemessenen Gaswert wie beispielsweise den Schwefeloxidgehalt, insbesondere SO₂, des Abgases nach dem Abgasreiniger 6. Falls dieser Wert einen vorbestimmten Grenzwert, beispielsweise für Kraftstoff mit 0.1% Schwefelgehalt einen Grenzwertbereich von 2 bis 5 ppm Schwefelanteil überschreitet, wird das Abgaseinlassventil 5 geschlossen, sodass kein Abgas mehr rezirkuliert wird. Zusätzlich wird auch das Abgasrückführungsventil 12 geschlossen. Somit wird sichergestellt, dass kein Abgas mit überhöhten Schwefelwerten in den Verbrennungsmotor zurückgeführt wird und somit übermässige schwefel-basiert Korrosion in der Verbrennungsmaschine 2 weitgehend verhindert wird.

Figur 4 zeigt das Versorgungssystem für ein Abgasrezirkulierungssystem 1 gemäss Figuren 1 bis 3. Das Versorgungssystem besteht aus den Hauptkomponenten Sammeltankeinheit 26 und Wasseraufbereitungseinheit 27. Das Abgasrezirkulierungssystem 1 ist in der Figur 4 vereinfacht dargestellt und enthält gemäss Darstellung die Komponenten Abgasreiniger 6 und Abgasvorwäscher 14. Diese beiden Komponenten sind mit der Wasseraufbereitungseinheit 27 und dem Sammeltank 26 in Wirkverbindung. Die übrigen Komponenten sind in Figur 1 dargestellt. Das zum Reinigen des Abgases verwendete Wasser wird zunächst im Wassersammeltank 15 der Sammeltankeinheit 26 geleitet. Von dort wird das Wasser über Sammeltankpumpe 16 in den Schmutzwasserpuffertank 17 geleitet. Der Schmutzwasserpuffertank 17 ist Teil der Wasseraufbereitungseinheit 27. Die Wasseraufbereitungseinheit 27 umfasst weiterhin eine Drainagepumpe 18, die das Wasser von Schmutzwasserpuffertank 27 in Wasserseparator 19 leitet. Wasserseparator 19 separiert Rückstände von gereinigtem Wasser. Die Rückstände werden in Rückstandstank 24 geleitet. Das gereinigte Wasser wird in Puffertank 20 geleitet und von dort entweder über Wasserversorgung 21 in den Abgasreiniger 6 bzw. den Abgasvorwäscher 14 geleitet oder über Auslaufpumpe 22 in Separator 23, der weiterhin Rückstände von sauberem Auslasswasser trennt. Die Rückstände werden in Rückstandstank 24 gesammelt und fachgerecht entsorgt. Zusätzlich ist NaOH-Versorgungstank 25 ausgebildet, der NaOH vor dem Wasserseparator 19 in das schmutzige Wasser aus dem Schmutzwasserpuffertank 17 zuführt. Prinzipiell ist das Design der Wasseraufbereitungseinheit 27 unabhängig von dem Design des Abgasrezirkulierungssystem 1 jedoch muss die Dimensionierung auf das Abgasrezirkulierungssystem 1 abgestimmt sein.

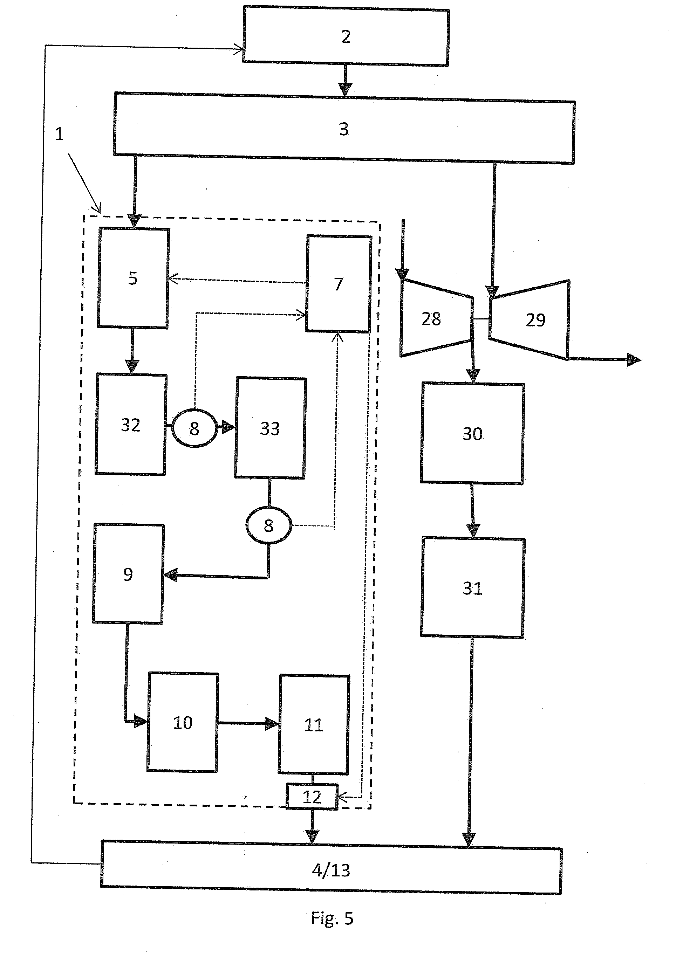

Figur 5 zeigt eine Ausführungsform mit einem Trockenreiniger. Das Abgasrezirkulierungssystem 1 mit Trockenreiniger umfasst ebenfalls analog zu den Systemen mit Nassreinigern gemäss Figuren 1-3 ein Abgaseinlassventil 5, eine Steuerungseinheit 7, einen Gassensor 8, einen Kühler 9, einen Wasserabscheider 10 und eine Druckerhöhungsvorrichtung 11. Die Reinigungsvorrichtung umfasst weiterhin eine Pulvereindüsung 32 zur Eindüsung von Natriumcarbonat-Pulver und einen Partikelabscheider 33. Das Natriumcarbonat bindet die Schwefelverbindungen, die im Abgas vorhanden sind, so dass die Schwefelverbindungen im Partikelabscheider 33 abgeschieden werden können. Der Gassensor 8 ist bevorzugt nach dem Partikelabscheider angeordnet. Alternativ oder zusätzlich kann ein Gassensor 8 zwischen Pulvereindüsung 32 und Partikelabscheider 33 angeordnet sein. Die übrige Ausbildung der Vorrichtung entspricht der Darstellung in den Figuren 1 bis 3.

## Patentansprüche

1. Abgasrezirkulierungssystem (1) für eine Verbrennungsmaschine (2), insbesondere eine 2-Takt Verbrennungsmaschine, bevorzugt einen Schiffsmotor, wobei die Verbrennungsmaschine (2) einen Abgasauslass (3) und einen Lufteinlass (4) aufweist, umfassend
- Mittel zum Verbinden des Abgasrezirkulierungssystems mit dem Abgasauslass (3) sowie
- Mittel zum Verbinden des Abgasrezirkulierungssystems mit dem Lufteinlass (4), wobei Abgas in Abgasflussrichtung vom Mittel zum Verbinden des Abgasrezirkulierungssystems mit dem Abgasauslass (3) zu dem Mittel zum Verbinden des Abgasrezirkulierungssystemes mit dem Lufteinlass (4) leitbar ist,
- ein Abgaseinlassventil (5) zum Kontrollieren des Einlasses von Abgas in das Abgasrezirkulierungssystem (1),
- einen Abgasreiniger (6) und
- eine Steuerungseinheit (7) zum Steuern des Abgasflusses durch das Abgasrezirkulierungssystem (1),
**dadurch gekennzeichnet, dass** Mittel zum Feststellen eines Ausschaltkriteriums vorhanden sind, durch die ein Steuersignal an die Steuerungseinheit (7) schickbar ist.

2. Abgasrezirkulierungssystem (1) nach Anspruch 1, **dadurch gekennzeichnet, dass** die Mittel zum Feststellen eines Ausschaltkriteriums durch einen Gassensor (8) gebildet sind, der in Abgasflussrichtung nach dem Abgasreiniger (6) angeordnet ist, insbesondere durch einen Gassensor (8), der mit der Steuerungseinheit (7) verbunden ist.

3. Abgasrezirkulierungssystem (1) nach Anspruch 1, **dadurch gekennzeichnet, dass** das Abgasrezirkulierungssystem (1) einen Kühler (9) in Abgasflussrichtung nach dem Abgasreiniger (6), bevorzugt in Abgasflussrichtung nach dem Gassensor umfasst.

4. Abgasrezirkulierungssystem (1) nach Anspruch 3, **dadurch gekennzeichnet, dass** das Abgasrezirkulierungssystem (1) einen Wasserabscheider (10) in Abgasflussrichtung nach dem Kühler (9) umfasst.

5. Abgasrezirkulierungssystem (1) nach einem der vorhergehenden Ansprüche, **dadurch gekennzeichnet, dass** das Abgasrezirkulierungssystem (1) eine Druckerhöhungsvorrichtung (11), insbesondere einen Turbolader oder ein Gebläse umfasst, so dass der Druck des gereinigten Abgases auf oder über das Ladedruckniveau erhöhbar ist.

6. Abgasrezirkulierungssystem (1) nach einem der vorhergehenden Ansprüche, **dadurch gekennzeichnet, dass** das Abgasrezirkulierungssystem (1) ein Abgasrückführungsventil (12) umfasst, welches in Abgasflussrichtung vor dem Mittel zum Verbinden des Abgasrezirkulierungssystems (1) mit dem Lufteinlass (4)angeordnet ist.

7. Abgasrezirkulierungssystem (1) nach einem der vorhergehenden Ansprüche, **dadurch gekennzeichnet, dass** der Gassensor (8) ein Schwefelsensor, insbesondere ein Schwefeloxidsensor, ist, so dass Schwefel im Abgas messbar ist.

8. Abgasrezirkulierungssystem (1) nach einem der vorhergehenden Ansprüche, **dadurch gekennzeichnet, dass** durch die Steuerungseinheit (7) das Abgaseinlassventil (5) und bevorzugt auch das Abgasrückführungsventil (12) steuerbar ist, insbesondere bevorzugt steuerbar durch ein Signal der Steuerungseinheit (7) steuerbar, wobei das Signal durch einen Vergleich in der Steuerungseinheit (7) eines gemessenen Wertes des Gassensors (8) mit einem Grenzwert auslösbar ist.

9. Verbrennungsmaschine (2), insbesondere 2-Takt Verbrennungsmaschine, umfassend einen Abgasauslass (3) und einen Lufteinlass (4), bevorzugt einen Spülluftreceiver (13), und ein Abgasrezirkulierungssystem (1) nach einem der Ansprüche 1 bis 8, wobei die Mittel zum Verbinden des Abgasrezirkulierungssystems (1) mit dem Lufteinlass (4) mit dem Lufteinlass (4) verbunden sind und die Mittel zum Verbinden des Abgasrezirkulierungssystems (1) mit dem Abgasauslass (3) mit dem Abgasauslass (3) verbunden sind.

10. Verfahren zum Überwachen des Abgasrezirkulierungsprozesses einer Verbrennungsmaschine (2), insbesondere mit einem Abgasrezirkulierungssystem (1) nach einem der Ansprüche 1 bis 8, wobei eine Steuerungseinheit (7) das Abgasrezirkulierungssystem (7) abschaltet, sobald ein Ausschaltkriterium erfüllt ist, insbesondere sobald ein Gassensor (8) das Überschreiten eines Grenzwertes anzeigt.

11. Verfahren nach Anspruch 10, **dadurch gekennzeichnet, dass** der Gassensor (8) den Schwefelgehalt, insbesondere den Schwefeloxidgehalt, des Abgases misst und bei Überschreiten eines Schwefelgrenzwertes ein Signal an die Steuerungseinheit (7) sendet, die daraufhin das Abgasrezirkulierungssystem (1) abschaltet, insbesondere durch Schliessen eines Abgaseinlassventils (5) und bevorzugt durch zusätzliches Schliessen eines Abgasrückführungsventils (12).

12. Verfahren nach einem der Ansprüche 10 oder 11, **dadurch gekennzeichnet, dass** das Ausschaltkriterium eine zu hohe oder zu tiefe Temperatur ist.

13. Verfahren nach einem der Ansprüche 10 bis 12, **dadurch gekennzeichnet, dass** das Ausschaltkriterium das Versagen eines Versorgungssystems für den Abgasreiniger (6) und/oder den Abgasvorwäscher (14) ist.

14. Verfahren zum Nachrüsten eines Abgasrezirkulierungssystems (1) nach einem der Ansprüche 1 bis 8 in einen Verbrennungsmotor, insbesonderen einen 2-Takt Schiffsmotor.

15. Kit zum Nachrüsten eines Verbrennungsmotors (2), insbesondere eines 2-Takt Schiffsmotors, mit einem Abgasrezirkulierungssystem (1) nach einem der Ansprüche 1 bis 8 oder bei vorhandenem Abgasrezirkulierungssystem (1) mit einem Gassensor und/oder einer Steuerungseinheit, durch die ein Verfahren gemäss einem der Ansprüche 10 bis 13 ausführbar ist, zur Überwachung der Abgasrezirkulierung.
